# EUROPEAN PATENT APPLICATION

(11) **EP 3 293 842 A1**
(43) Date of publication of application: **14.03.2018**
(21) Application number: 17190656.3
(22) Date of filing: 12.09.2017
(51) Int. Cl.: H02G 3/08

(54) **FRAME FOR MOUNTING ELECTRICAL APPARATUS**

(30) Priority: 12.09.2016 ES 201631186
(71) Applicant: Schneider Electric España, S.A., 08019 Barcelona (ES)
(72) Inventor: REBOLÉ OLLETA, José Antonio, 08019 BARCELONA (BARCELONA) (ES); GONZÁLEZ IRIBAS, Aitor, 08019 BARCELONA (BARCELONA) (ES); ANDRÉS RODRÍGUEZ, Iñigo, 08019 BARCELONA (BARCELONA) (ES); SÁINZ HERMOSO, Pedro Matías, 08019 BARCELONA (BARCELONA) (ES)
(74) Representative: Intès, Didier Gérard André

(57) **Abstract**

The present invention relates to a frame for mounting electrical apparatus, comprising a rectangular structure (1) with a rectangular central opening (2) having first formations (3) on its longitudinal edges (2.1, 2.2) and on its transverse edges (2.3, 2.4) for the elastic snap-fitting of electrical apparatus (4), and at least one pair of two independent cross members (6) which are arranged transversely between the longitudinal edges (2.1, 2.2) of the central opening (2), wherein the cross members (6) have fixing means (7) on their smaller sides (6.1, 6.2) for the elastic snap-fitting of the cross members (6) onto the longitudinal edges (2.1, 2.2) of the central opening (2), and wherein the cross members (6) have second formations (8) on only one of their larger sides (6.3) for the elastic snap-fitting of electrical apparatus (4).

## Description

### Field of the Art

The present invention relates to the mounting of electrical apparatus, proposing a frame for mounting various electrical apparatus, with an embodiment that allows arranging the frame in a horizontal or vertical position, the electrical apparatus maintaining their natural mounting position, and allows changing the number and arrangement of electrical apparatus in the frame.

### State of the Art

Electrical installations and other similar installations have elements that perform various functions, such as switches, dimmers, sockets, etc., which are conventionally arranged on brick walls, furniture boards or similar surfaces, generally comprising a receptacle that can be built into or placed on the surface of application, on which a frame for supporting the electrical apparatus to be installed is fixed, the assembly being complemented with an esthetically-pleasing finishing cover plate.

Frames for mounting electrical apparatus are formed by a square or rectangular structure which has a central opening with formations on the edges for anchoring the electrical apparatus to be installed, and holes for the passage of screws for fixing the frame on a mounting receptacle, the electrical apparatus being secured on the frame generally by means of clipping using elastic tabs which the electrical apparatus have on two opposite sides, and the tabs thereby being locked in the formations of the edges of the central opening of the frame.

It is common to put together a number of electrical apparatus, that are identical or in combination, to perform different functions, there being for this purpose square or rectangular frames such as those described in patent document ES2205995B1 belonging to the same proprietor as the present invention, which frames can be coupled to one another for mounting different associated electrical apparatus, establishing a simple and versatile solution for mountings of that type.

Figures 18 and 19 of said patent document ES2205995A1 show a frame having a rectangular structure with a central opening having on its four edges formations, by way of a ribbed area, for the elastic snap-fitting of electrical apparatus. The central opening has standard measurements of about 45 x 90 mm, and as a result of its ribbed area, it allows fixing square-shaped electrical apparatus (with standard measurements of 45 x 45 mm) or rectangular-shaped electrical apparatus (with standard measurements of 45 x 22.5 mm) between its longitudinal edges. Likewise, the ribbed area of the central opening allows fixing closure lids covering the entire central opening between its transverse edges. However, this rectangular frame is generally envisaged for being arranged on a brick wall in a horizontal position because if the frame is placed in a vertical position, the electrical apparatus end up rotated by 90° with respect to their natural mounting position. This is due to the fact that electrical apparatus only have elastic tabs on two opposite sides which must coincide with the longitudinal edges of the central opening of the frame.

Patent document EP1675240A1 shows a rectangular frame for mounting electrical apparatus, wherein the frame can be arranged in both a horizontal position and a vertical position, the electrical apparatus maintaining a natural mounting position at all times. To that end and as shown in Figures 10 and 11 of said patent document, the frame incorporates an intermediate cross member which is fixed between the longitudinal edges of the central opening by its two smaller sides, such that the central opening is divided into two independent openings, wherein two square-shaped electrical apparatus can be fixed, one in each independent opening, or four rectangular-shaped electrical apparatus can be fixed, two in each independent opening.

The cross member has formations on each of its two larger sides for mounting the electrical apparatus, such that the electrical apparatus can be fixed between a transverse edge of the central opening and a larger side of the cross member, the electrical apparatus therefore being arranged in a natural mounting position when the frame is installed in a vertical position, as shown in Figure 11 of said patent document.

However, when use of the cross member is not required, and the frame is arranged in a horizontal position, for example with two square-shaped electrical apparatus centered in the central opening, as shown in Figure 12 of said patent document, there are produced at the ends of the central opening two gaps which must be covered by means of lids having special measurements for said end gaps, or by means of a decorative cover plate that is thicker than standard cover plates and must be specifically made for covering said end gaps.

### Object of the Invention

The present invention proposes a rectangular frame for mounting electrical apparatus, which is provided with cross members with a particular structural embodiment that allows modifying the space of the central opening of the frame for mounting one or more electrical apparatus, as required, and with the possibility of arranging the frame in a horizontal position or a vertical position, the electrical apparatus maintaining their natural mounting position at all times.

The frame for mounting electrical apparatus of the invention comprises a rectangular structure with a rectangular central opening having first formations on its longitudinal edges and on its transverse edges for the elastic snap-fitting of electrical apparatus. The rectangular frame additionally comprises at least one pair of two independent cross members which are arranged transversely between the longitudinal edges of the central opening.

The cross members have fixing means on their smaller sides for the elastic snap-fitting of the cross members onto the longitudinal edges of the central opening, and the cross members also have second formations which are only arranged on one of their larger sides for the elastic snap-fitting of electrical apparatus, whereas the other larger side of each cross member lacks said formations and is configured for being coupled to a transverse edge of the central opening of the frame.

The possibility of each cross member having a side flange on the formation-free other larger side thereof has been envisaged, the side flange having a coupling shape configured for engaging one of the transverse edges of the central opening of the frame when the cross member is arranged at one end of the rectangular opening.

According to this cross member configuration and according to a first mounting arrangement, the two cross members are arranged transversely between the longitudinal edges of the central opening according to an intermediate position of said central opening, such that the central opening is divided into two end openings for mounting electrical apparatus in each of said end openings. In this first mounting arrangement, the two cross members are arranged with their formation-free larger sides of the side flange facing one another.

According to a second mounting arrangement, the two cross members are separated from one another, and each of the cross members is arranged transversely between the longitudinal edges of the central opening according to an end position of said central opening, such that a smaller central opening for mounting electrical apparatus is defined between the cross members. In this second mounting arrangement, each cross member is coupled by means of its formation-free larger side to a transverse edge of the central opening.

The use of the frame with the pair of two independent cross members therefore allows, on one hand, dividing the central opening into two independent end openings for mounting separate electrical apparatus, the frame being able to be arranged in a horizontal arrangement or a vertical arrangement, the electrical apparatus maintaining their natural mounting position at all times, and on the other hand, creating a smaller central opening for mounting electrical apparatus in the center of the frame, the same two cross members being used for closing the gaps produced at the ends of the central opening. The cross members therefore perform two functions, first there are used as a support element for supporting the electrical apparatus when the frame is arranged in a vertical position, and second they are used as a closure element for closing the ends of the central opening when the electrical apparatus are arranged in the center of said central opening.

Therefore, a highly versatile frame is thus obtained, which frame allows changing the number and arrangement of elements with electrical functions or the like in the installations of application, resulting from an advantageous functionality making it novel and preferred with respect to known frames having the same application.

### Description of the Drawings

Figure 1 shows a front view of a rectangular frame according to the invention, without cross members in the central opening.
Figure 2 is a rear view of the frame of the preceding figure.
Figure 3 shows a front view of the frame with a pair of cross members of the central opening in a first mounting arrangement, dividing the central opening into two end openings.
Figure 4 shows a front view of the frame with the pair of cross members of the central opening in a second mounting arrangement, defining a smaller central opening with the cross members arranged at the ends.
Figure 5 shows section V-V indicated in Figure 4.
Figure 6 shows section VI-VI indicated in Figure 4.
Figure 7 shows a front view of the frame with the central opening divided into two end openings in which respective electrical apparatus are arranged according to a horizontal installation arrangement.
Figure 8 shows a front view of the frame with the space of the central opening made smaller by means of the cross members arranged at the ends, including two electrical apparatus in the resulting space, according to a horizontal installation arrangement.
Figure 9 shows section IX-IX indicated in Figure 7.
Figure 10 shows a front view of the frame with the central opening divided into two end openings in which respective electrical apparatus are arranged according to a vertical installation arrangement.
Figure 11 shows a perspective view of the frame with one of the cross members mounted on the frame.

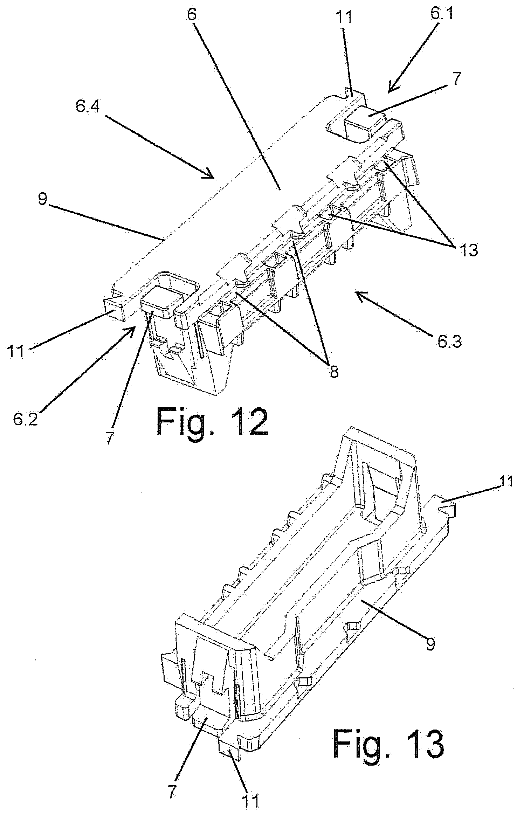

Figures 12 and 13 shows respective perspective views of one of the cross members of the frame.
Figure 14 shows a perspective view of a rectangular frame according to the invention with two pairs of cross members.

### Detailed Description of the Invention

The invention relates to a rectangular frame for mounting electrical apparatus. In the sense of the present invention, "electrical apparatus" is understood to mean any electrical means or device that is part of the electrical installation of a building and is usually built into the wall of the building. Said term therefore includes, in a non-limiting manner, switches, electrical outlets, data outlets, TV outlets, telephone outlets, buttons, commutators, general electrical control devices, connectors, thermostats, timers, fuse holders, doorbells, emergency or signaling lights, LCD displays and the like.

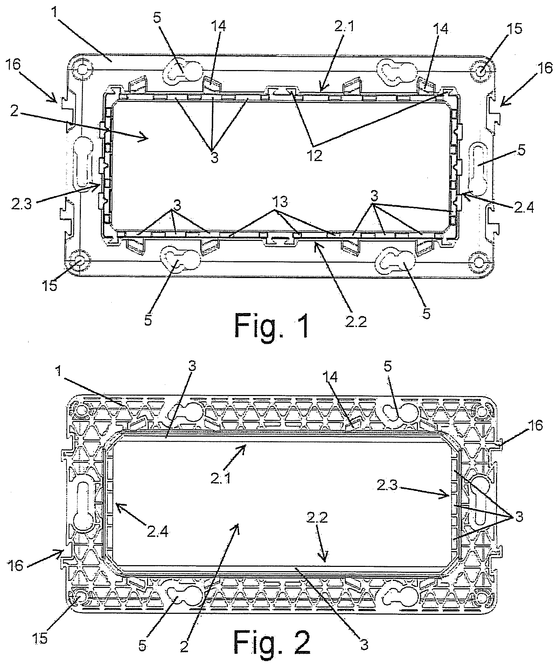

As shown in Figures 1 and 2, the frame comprises a rectangular structure (1) having a rectangular central opening (2) with two longitudinal edges (2.1, 2.2) and two transverse edges (2.3, 2.4). The four edges (2.1, 2.2, 2.3, 2.4) of the rectangular central opening (2) have first formations (3) for the elastic snap-fitting of electrical apparatus (4).

The rectangular structure (1) can be made of a plastic material, metallic material, or combinations thereof, and is provided with conventional means for fixing on a mounting receptacle arranged on a wall (not depicted in the drawings), such as slots (5) for fixing the frame to the receptacle by means of screws, for example.

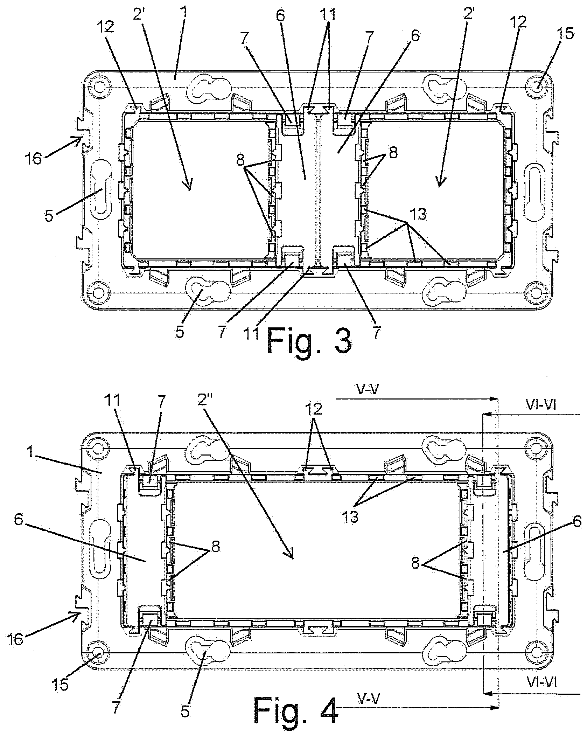

According to the invention, the rectangular frame additionally comprises at least one pair of two independent cross members (6) which are configured for being arranged transversely between the two longitudinal edges (2.1, 2.2) of the central opening (2) of the rectangular structure (1), as seen in Figures 3 and 4.

The cross members (6) have a rectangular shape and each of them comprises two smaller sides (6.1, 6.2) and two larger sides (6.3, 6.4). The cross members (6) have fixing means (7) on their smaller sides (6.1, 6.2), which are configured for the elastic snap-fitting of the cross members (6) onto the first formations (3) of the longitudinal edges (2.1, 2.2) of the central opening (2), such that said cross members (6) can optionally be incorporated or removed, depending on the mounting configuration of the electrical apparatus (4) to be established in the frame.

The cross members (6) have second formations (8) on one of their larger sides (6.3) which are configured for the elastic snap-fitting of electrical apparatus (4). It has been envisaged that the second formations (8) are identical to the first formations (3) of the transverse edges (2.3, 2.4) of the central opening (2).

The cross members (6) have on the other larger side (6.4) thereof a side flange (9) having a planar edge to prevent interfering with the side flange (9) of the second cross member (6) of the pair placed adjacent to the first cross member (6), according to a first mounting arrangement of the cross members (6) on the frame (see Figure 3).

The side flange (9) of each cross member (6) has a lower portion with a coupling shape configured for engaging one of the transverse edges (2.3, 2.4) of the central opening (2) when the cross member (6) is arranged at one end of the central opening (2), according to a second mounting arrangement of the cross members (6) on the frame (see Figure 4). The side flange (9) is not secured on the transverse edge (2.3, 2.4) of the central opening (2), but rather rests on said transverse edge (2.3, 2.4).

Therefore, according to the first mounting arrangement the two cross members (6) of a pair can be arranged in an intermediate position of the central opening (2), dividing said central opening (2) into two independent end openings (2'), as seen in the first mounting arrangement of Figure 3. In this mounting arrangement, the cross members (6) are arranged with their side flanges (9) facing one another, such that each end opening (2') has on all its sides formations (3,8) for mounting the electrical apparatus (4), specifically each end opening (2') is bordered by the longitudinal edges (2.1, 2.2) and a transverse edge (2.3, 2.4) of the central opening (2) having the first formations (3) and by the larger side (6.3) of the cross member (6) having the second formations (8).

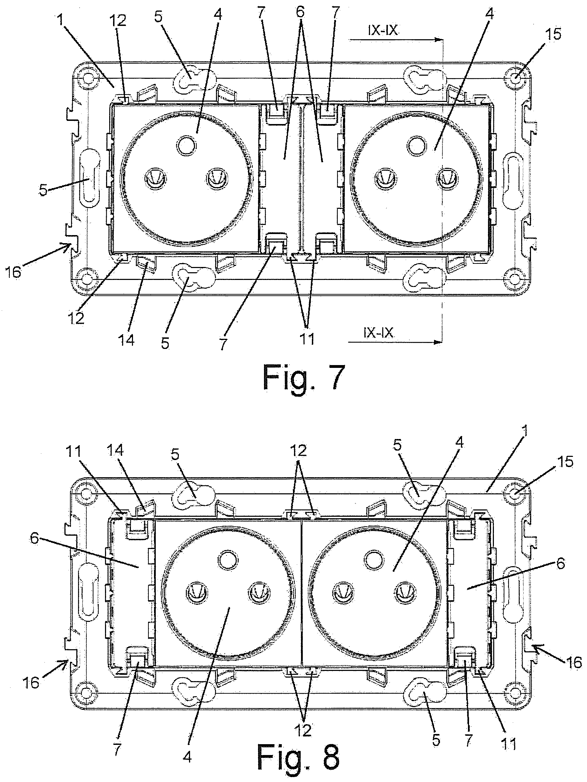

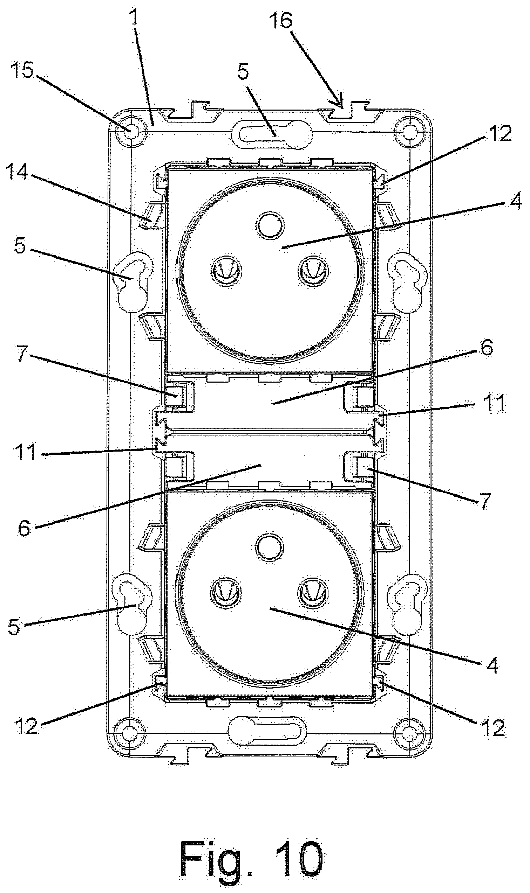

The arrangement of the cross members (6) of a pair in an intermediate position of the central opening (2) defines end openings (2') having, for example, standard measurements of 45 mm long by 45 mm wide. Therefore, a square-shaped electrical apparatus (4) having standard measurements of 45 x 45 mm, for example, can be mounted on each of said end openings (2') as shown in Figures 7 and 10, or two rectangular-shaped electrical apparatus (4) having standard measurements of 45 x 22.5 mm, for example, can also be mounted. In any case, this measurement configuration is non-limiting, and the end openings (2') can have any type of standard measurement required for mounting the electrical apparatus (4).

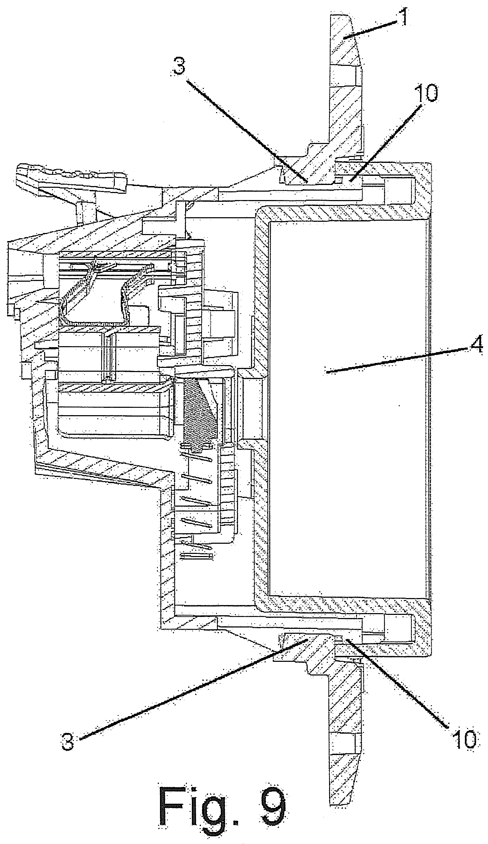

The electrical apparatus (4) are usually provided with elastic snap-fitting means (10) on only two opposite side edges, generally on their upper edge and lower edge, such that the electrical apparatus (4) are fixed by the snap-fitting means (10) on the longitudinal edges (2.1, 2.2) of the corresponding end opening (2'), as shown in the section view of Figure 9. Common rectangular frames are usually mounted on the wall of a building in a horizontal position, as shown in Figures 7 and 8, but when the frame is to be mounted in a vertical arrangement, the electrical apparatus (4) is turned 90° with respect to its horizontal position, since the electrical apparatus (4) only has snap-fitting means (10) on two of its side edges. However, by arranging the cross members (6) of a pair in an intermediate position of the central opening (2), the frame of the invention allows mounting the electrical apparatus (4) in a vertical arrangement without them being turned 90° with respect to the horizontal position thereof, as shown in Figure 10. Therefore, the electrical apparatus (4) is fixed in its respective end opening (2') when the snap-fitting means (10) thereof are attached to a transverse edge (2.3, 2.4) of the end opening (2') and to the larger side (6.3) of the respective cross member (6).

The cross members (6) therefore allow, by means of their larger side (6.3) provided with the second formations (8), in combination with the first formations (3) of the edges (2.1, 2.2, 2.3, 2.4) of the central opening (2), effectively securing the electrical apparatus (4) in two alternative positions at 90° in the frame, the frame being able to be installed in a horizontal position, such as in Figures 7 and 8, or in a vertical position, such as in Figure 10, the electrical apparatus (4) being kept suitably fixed in their natural position in any of said positions, providing great versatility when using the frame.

As seen in the second mounting arrangement of Figure 4, the two cross members (6) of a pair are arranged separated from one another, each cross member (6) being arranged in an end position of the central opening (2), such that a smaller central opening (2'') for mounting electrical apparatus (4) is defined between the cross members (6). In this mounting arrangement, the lower portion of the side flange (9) of each cross member (6) can be coupled to the respective transverse edge (2.3, 2.4) of the central opening (2) on which it is arranged.

The arrangement of the cross members (6) in end positions of the central opening (2) defines a smaller central opening (2'') having standard measurements of 45 x 90 mm, for example. Therefore, two square-shaped electrical apparatus (4) having standard measurements of 45 x 45 mm, for example, can be mounted on said smaller central opening (2'') as shown in Figure 8, or four rectangular-shaped electrical apparatus (4) having standard measurements of 45 x 22.5 mm, for example, can also be mounted, these mounting configurations not being limiting in any case.

The cross members (6) can therefore be located in an intermediate position of the central opening (2) which allows mounting standard electrical apparatus in a vertical or horizontal position, or in end positions of the central opening (2), such that the same cross members (6) can be used as closure elements for closing the resulting gaps of the central opening (2), providing the frame with great versatility in terms of mounting thereof.

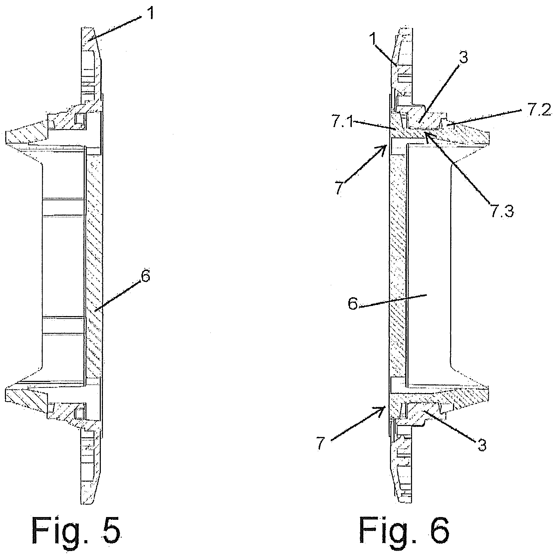

The section view of Figure 6 shows the elastic snap-fitting of one of the cross members (6) onto the longitudinal edges (2.1, 2.2) of the central opening (2). The fixing means (7) comprise an upper projection (7.1) and a lower projection (7.2) between which there is defined a U-shaped recess (7.3) which engages one of the first formations (3) of the longitudinal edges (2.1, 2.2) of the central opening (2). As seen in the section view of Figure 9, the electrical apparatus (4) comprise snap-fitting means (10), identical to the fixing means (7), which engage the first formations (3) of the longitudinal edges (2.1, 2.2) of the central opening (2).

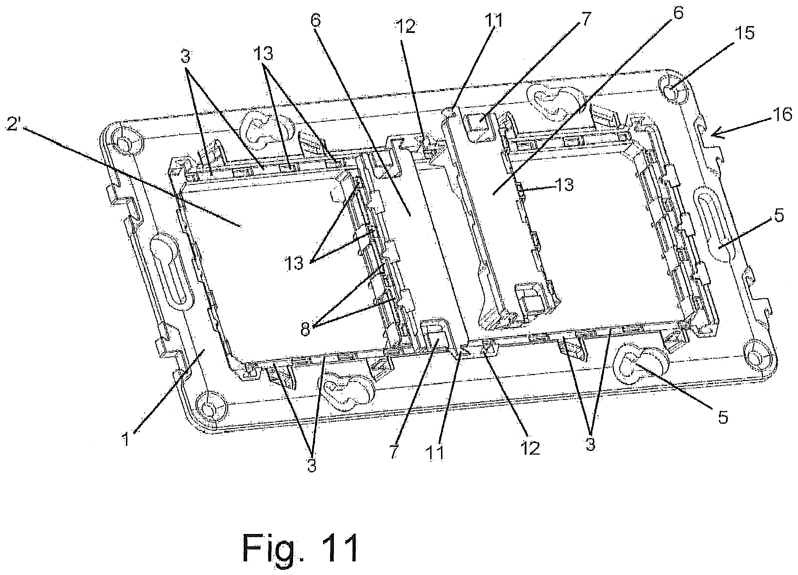

As seen in Figure 11, the cross members (6) have projections (11) defined at the ends of the side flange (9), in the transition area between a larger side (6.4) and a smaller side (6.1, 6.2) of the cross member (6). The projections (11) are configured for engaging recesses (12) of the longitudinal edges (2.1, 2.2) of the central opening (2). As seen in the drawings, it has been envisaged in a non-limiting manner that the projections (11) have a half dovetail shape reciprocally engaging the recesses (12) of the frame.

Therefore, additional securing of the cross members (6) on the frame is established by means of the joint action of the projections (11) of the cross members (6) and the recesses (12) of the central opening (2) of the frame, at the same time increasing frame rigidity as well as establishing a predetermined position for mounting the cross members (6) on the frame, preventing incorrect placement.

The frame has grooves (13) on the edges (2.1, 2.2, 2.3, 2.4) of the central opening (2) used to prevent interfering with the elastic snap-fitting means of some electrical functions arranged in the frame. The cross members (6) also have grooves (13) on the larger side (6.3) where the second formations (8) for fixing the electrical apparatus (4) are placed.

The frame has on its longitudinal edges (2.1, 2.2) through housings (14) for fixing a decorative cover plate on the frame. The frame also has in the corners holes (15) for fixing the frame by means of screws to a flat surface, such as a wall. On the other hand, the frame has on its smaller sides latching means (16) for coupling with other frames.

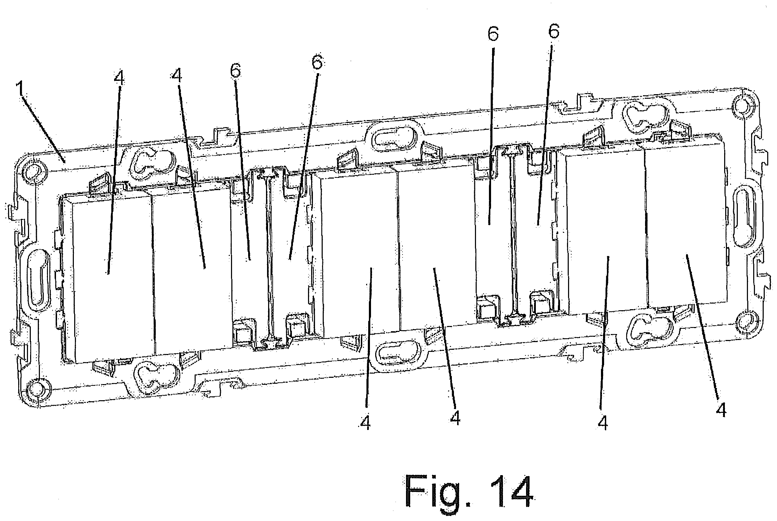

Figures 1 to 4 and 7 to 10 show a rectangular frame with a pair of two cross members (6); nevertheless this embodiment does not exclude configurations of another type, more than one pair of cross members (6) being able to be arranged in the central opening (2) of the frame depending on the size of the rectangular frame. In this sense, Figure 14 shows a rectangular frame with two pairs of cross members (6) such that the central opening (2) is divided into three independent openings where different electrical apparatus (4) can be arranged. Likewise, the frame can have more than one central opening (2), at least one pair of two cross members (6) being arranged in each central opening (2).

## Claims

1. A frame for mounting electrical apparatus, comprising a rectangular structure (1) with a rectangular central opening (2) having first formations (3) on its longitudinal edges (2.1, 2.2) and on its transverse edges (2.3, 2.4) for the elastic snap-fitting of electrical apparatus (4), **characterized in that** the rectangular frame additionally comprises at least one pair of two independent cross members (6) which are arranged transversely between the longitudinal edges (2.1, 2.2) of the central opening (2), wherein the cross members (6) have fixing means (7) on their smaller sides (6.1, 6.2) for the elastic snap-fitting of the cross members (6) onto the longitudinal edges (2.1, 2.2) of the central opening (2), and wherein the cross members (6) have second formations (8) on only one of their larger sides (6.3) for the elastic snap-fitting of electrical apparatus (4).

2. The frame for mounting electrical apparatus according to the preceding claim, **characterized in that** each cross member (6) has on the other larger side (6.4) thereof a side flange (9) having a coupling shape configured for engaging one of the transverse edges (2.3, 2.4) of the central opening (2).

3. The frame for mounting electrical apparatus according to any one of the preceding claims, **characterized in that** the cross members (6) have projections (11) which are configured for engaging recesses (12) of the longitudinal edges (2.1, 2.2) of the central opening (2).

4. The frame for mounting electrical apparatus, according to any one of the preceding claims, **characterized in that** the two cross members (6) are facing one another and arranged transversely between the longitudinal edges (2.1, 2.2) of the central opening (2) according to an intermediate position of said central opening (2), such that the central opening (2) is divided into two end openings (2') for mounting electrical apparatus (4) in each of said end openings (2').

5. The frame for mounting electrical apparatus according to any one of claims 1 to 3, **characterized in that** the two cross members (6) are separated from one another, and each of said cross members (6) is arranged transversely between the longitudinal edges (2.1, 2.2) of the central opening (2) according to an end position of said central opening (2), such that a smaller central opening (2") for mounting electrical apparatus (4) is defined between the cross members (6).
